# FASCICULE DE BREVET EUROPEEN

(11) **EP 4 412 844 B1**
(45) Date de publication et mention de la délivrance du brevet: **13.08.2025**
(21) Numéro de dépôt: 22773761.6
(22) Date de dépôt: 01.09.2022
(51) Int. Cl.: B60H 1/00, B60H 1/22

(54) **CONTRÔLE DU PRÉ-CONDITIONNEMENT D'UN VÉHICULE ENDORMI**
STEUERUNG DER VORKONDITIONIERUNG EINES SCHLAFENDEN FAHRZEUGS
CONTROL OF THE PRECONDITIONING OF A SLEEPING VEHICLE

(30) Priorité: 04.10.2021 FR 2110450
(43) Date de publication de la demande: 14.08.2024
(73) Titulaire: Stellantis Auto SAS, 78300 Poissy (FR)
(72) Inventeur: BOTCHON, Yannick, 92160 ANTONY (FR)
(74) Mandataire: PSIP
(86) Numéro de dépôt international: PCT/FR2022/051644
(87) Numéro de publication internationale: WO 2023/057693

(56) Documents cités:
- EP-A1- 3 217 010
- KR-A- 20180 131 753
- KR-B1- 101 619 874
- US-B2- 10 792 975

## Description

### Domaine technique de l'invention

L'invention concerne les véhicules dans lesquels un pré-conditionnement peut être réalisé avant qu'ils ne soient utilisés.

### Etat de la technique

Certains véhicules, éventuellement de type automobile, comprennent un groupe motopropulseur (ou GMP), une batterie de servitude rechargeable (éventuellement via un convertisseur), et au moins un équipement électrique propre à assurer un pré-conditionnement lorsqu'il est alimenté en énergie électrique par la batterie de servitude alors que le GMP ne fonctionne pas. Dans ce qui suit et ce qui précède, on entend par « batterie de servitude » une batterie rechargeable de type très basse tension (typiquement de 12 V à 48 V). Par exemple, lorsque le véhicule comprend un habitacle, le pré-conditionnement peut concerner l'aérothermie dans cet habitacle, et dans ce cas il est réalisé avant que les passagers ne pénètrent dans l'habitacle afin qu'ils bénéficient dans ce dernier d'un confort aérothermique prédéfini (par programmation). Mais d'autres pré-conditionnements peuvent être réalisés à l'avance, et notamment un pré-conditionnement d'une machine motrice du GMP du véhicule.

Lorsque le véhicule n'a pas été utilisé depuis longtemps ou qu'il s'est endormi avec sa batterie de servitude ayant un état de charge faible, il peut arriver que la réalisation du pré-conditionnement provoque une décharge (additionnelle) de la batterie de servitude qui la rend incapable de fournir suffisamment d'énergie électrique pour le réveil du véhicule et le démarrage du GMP. Or, actuellement, il n'existe pas de solution connue permettant d'empêcher la réalisation au moins partielle d'un pré-conditionnement lorsque l'état de charge de la batterie de servitude n'est pas suffisamment important pour garantir le réveil ultérieur du véhicule et le démarrage ultérieur du GMP.

En outre, l'état de la technique est connu des documents KR20180131753A et US10792975B2 correspondant au préambule de la revendication 1. L'invention a donc notamment pour but d'améliorer la situation.

### Présentation de l'invention

Elle propose à cet effet un procédé de contrôle destiné à être mis en œuvre dans un véhicule comprenant un groupe motopropulseur et au moins un équipement électrique propre à assurer un pré-conditionnement lorsqu'il est alimenté en énergie électrique par une batterie de servitude ayant un état de charge comprenant une étape dans laquelle, lorsque le pré-conditionnement est requis pendant que le véhicule est endormi, on autorise ce pré-conditionnement tant que l'état de charge demeure strictement supérieur à un seuil, représentatif d'un état de charge nécessaire à la mise en fonctionnement du groupe motopropulseur.

Ce procédé de contrôle se caractérise par le fait qu'il comprend une condition d'autorisation supplémentaire étant qu'une quantité d'état de charge choisie, allouée au pré-conditionnement, n'a pas été intégralement utilisée par le pré-conditionnement.

Grâce à ce contrôle portant sur les états de charge de la batterie de servitude, on a l'assurance que la réalisation au moins partielle d'un pré-conditionnement n'empêchera pas la batterie de servitude de fournir suffisamment d'énergie électrique pour le réveil du véhicule et le démarrage du GMP.

Le procédé de contrôle selon l'invention peut comporter d'autres caractéristiques qui peuvent être prises séparément ou en combinaison, et notamment :
- dans son étape on peut utiliser une quantité d'état de charge choisie qui est comprise entre 5% et 15% d'un état de charge maximal de la batterie de servitude ;
- en variante, dans son étape on peut utiliser une quantité d'état de charge choisie qui est comprise entre 5% et 15% d'un état de charge initial de la batterie de servitude au début du pré-conditionnement ;

- dans son étape on peut choisir le seuil en fonction d'une température en cours de la batterie de servitude ;
- dans son étape l'équipement électrique peut être propre à assurer un pré-conditionnement aérothermique du véhicule.

L'invention propose également un dispositif de contrôle destiné à équiper un véhicule comprenant un groupe motopropulseur et au moins un équipement électrique propre à assurer un pré-conditionnement lorsqu'il est alimenté en énergie électrique par une batterie de servitude ayant un état de charge.

Ce dispositif de contrôle se caractérise par le fait qu'il comprend au moins un processeur et au moins une mémoire agencés pour effectuer les opérations consistant, lorsque le pré-conditionnement est requis pendant que le véhicule est endormi, à autoriser ce pré-conditionnement tant que l'état de charge demeure strictement supérieur à un seuil, représentatif d'un état de charge nécessaire à la mise en fonctionnement du groupe motopropulseur, et qu'une quantité d'état de charge choisie, allouée au pré-conditionnement, n'a pas été intégralement utilisée par le pré-conditionnement.

L'invention propose également un véhicule, éventuellement de type automobile, et comprenant un groupe motopropulseur, au moins un équipement électrique propre à assurer un pré-conditionnement lorsqu'il est alimenté en énergie électrique par une batterie de servitude ayant un état de charge, ainsi qu'un dispositif de contrôle du type de celui présenté ci-avant.

### Brève description des figures

D'autres caractéristiques et avantages de l'invention apparaîtront à l'examen de la description détaillée ci-après, et des dessins annexés, sur lesquels :
[Fig. 1] illustre schématiquement et fonctionnellement un exemple de réalisation d'un véhicule comprenant un réseau de bord, auquel est couplé un équipement électrique de conditionnement, une batterie de servitude et un boîtier de distribution comportant un dispositif de contrôle selon l'invention,
[Fig. 2] illustre schématiquement et fonctionnellement un exemple de réalisation d'un calculateur de supervision comprenant un dispositif de contrôle selon l'invention, et
[Fig. 3] illustre schématiquement un exemple d'algorithme mettant en œuvre un procédé de contrôle selon l'invention.

### Description détaillée de l'invention

L'invention a notamment pour but de proposer un procédé de contrôle, et un dispositif de contrôle DC associé, destinés à permettre le contrôle d'un pré-conditionnement dans un véhicule V ayant un groupe motopropulseur inactif (ou endormi) et au moins un équipement électrique de conditionnement EP.

Dans ce qui précède et ce qui suit, on entend par « véhicule endormi » un véhicule ayant le contact coupé (selon l'ancienne mais néanmoins toujours usitée appellation), et donc ayant son GMP arrêté (ou endormi) et ses calculateurs non alimentés (hormis celui qui est chargé d'assurer la veille et de réveiller les autres).

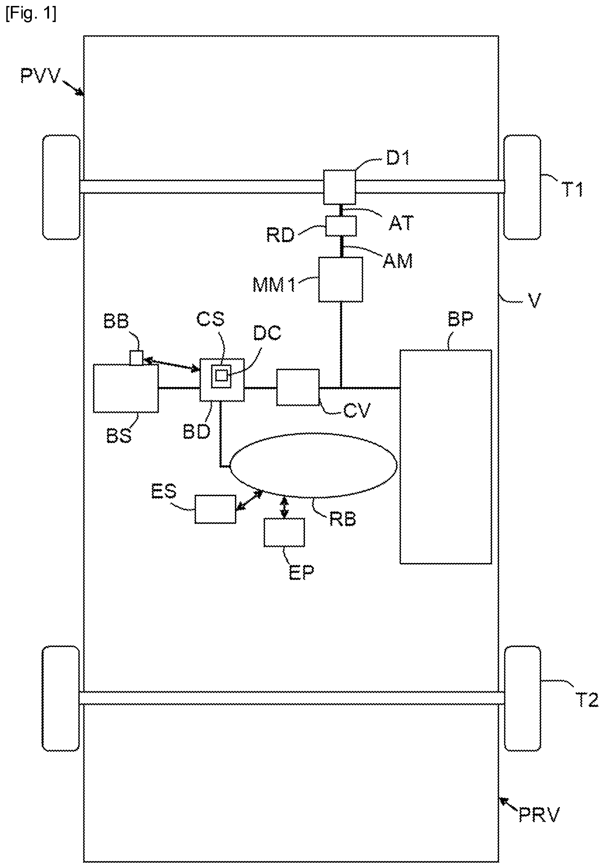

Par ailleurs, dans ce qui suit, on considère, à titre d'exemple non limitatif, que le véhicule V est de type automobile. Il s'agit par exemple d'une voiture, comme illustré sur la figure 1. Mais l'invention n'est pas limitée à ce type de véhicule. Elle concerne en effet tout type de véhicule comprenant un réseau de bord auquel est couplé au moins un équipement électrique de conditionnement et alimenté en énergie électrique par au moins une batterie de servitude rechargeable (éventuellement par un convertisseur). Ainsi, elle concerne, par exemple, les véhicules terrestres (véhicules utilitaires, camping-cars, minibus, cars, camions, motocyclettes, engins de voirie, engins de chantier, engins agricoles, engins de loisir (motoneige, kart), et engins à chenille(s), par exemple), les bateaux et les aéronefs.

De plus, on considère dans ce qui suit, à titre d'exemple non limitatif, que le véhicule V comprend un groupe motopropulseur (ou GMP) de type tout électrique (et donc dont la motricité est assurée exclusivement par au moins une machine motrice électrique MM1). Mais le GMP pourrait être de type hybride (thermique et électrique) ou exclusivement thermique.

Enfin, on considère dans ce qui suit, à titre d'exemple non limitatif, que le pré-conditionnement concerne l'aérothermie dans l'habitacle du véhicule V. Par conséquent, l'équipement électrique de conditionnement EP, devant assurer le pré-conditionnement dans l'habitacle avant que les passagers ne pénètrent dedans (pour bénéficier d'un confort aérothermique prédéfini (par programmation)), est une installation de chauffage et/ou climatisation. Mais d'autres pré-conditionnements peuvent être réalisés à l'avance (lorsque le GMP est inactif), et notamment un pré-conditionnement d'une machine motrice du GMP ou d'une pompe à huile ou encore des roues du véhicule V.

On a schématiquement représenté sur la figure 1 un véhicule V comprenant une chaîne de transmission à GMP électrique, un réseau de bord RB, un équipement électrique de conditionnement EP, une batterie de servitude BS, un convertisseur CV, un dispositif de contrôle DC selon l'invention, et un boîtier de distribution BD.

Le réseau de bord RB est un réseau d'alimentation électrique auquel sont couplés (ou connectés) des équipements (ou organes) électriques (ou électroniques) qui consomment de l'énergie électrique, et notamment l'équipement électrique de conditionnement EP.

Dans l'exemple qui est illustré non limitativement, la batterie de servitude BS est chargée de fournir de l'énergie électrique au réseau de bord RB soit seule lorsque le GMP n'est pas en fonctionnement, soit en complément (ici) de celle fournie par le convertisseur CV (alimenté par une batterie principale BP décrite plus loin) lorsque le GMP est en fonctionnement (et en cas de besoin).

La batterie de servitude BS peut être de type très basse tension (typiquement 12 V, 24 V ou 48 V), et est rechargeable, ici au moins par le convertisseur CV. On considère dans ce qui suit, à titre d'exemple non limitatif, que la batterie de servitude BS est de type Lithium-ion 12 V.

On notera que dans l'exemple illustré non limitativement sur la figure 1 le véhicule V comprend un boîtier de surveillance BB qui est couplé à la batterie de servitude BS et qui est chargé de déterminer, estimer ou mesurer au moins sa température (interne) tb, la tension à ses bornes et son état de charge en cours ec.

La chaîne de transmission a un GMP qui est, ici, purement électrique et donc qui comprend, notamment, une machine motrice MM1 électrique, un arbre moteur AM, une batterie principale BP et un arbre de transmission AT. On entend ici par « machine motrice électrique » une machine électrique agencée de manière à fournir ou récupérer du couple pour déplacer le véhicule V.

La machine motrice MM1 (ici un moteur électrique) est couplée à la batterie principale BP, afin d'être alimentée en énergie électrique, ainsi qu'éventuellement d'alimenter cette batterie principale BP en énergie électrique. Elle est couplée à l'arbre moteur AM, pour lui fournir du couple par entraînement en rotation. Cet arbre moteur AM est ici couplé à un réducteur RD qui est aussi couplé à l'arbre de transmission AT, lui-même couplé à un premier train T1 (ici de roues), de préférence via un différentiel D1.

Ce premier train T1 est ici situé dans la partie avant PVV du véhicule V. Mais dans une variante ce premier train T1 pourrait être celui qui est ici référencé T2 et qui est situé dans la partie arrière PRV du véhicule V.

Par exemple, la batterie principale BP peut être de type basse tension (typiquement 400 V à titre illustratif). Mais elle pourrait être de type moyenne tension ou haute tension.

La machine motrice MM1 est aussi couplée au convertisseur CV qui est aussi couplé indirectement à la batterie de servitude BS, notamment pour la recharger avec de l'énergie électrique issue de la batterie principale BP et convertie.

Le convertisseur CV est aussi chargé d'alimenter le réseau de bord RB en énergie électrique issue de la batterie principale BP et convertie lorsque le GMP est en fonctionnement, en plus d'assurer la recharge de la batterie de servitude BS.

On notera également que dans l'exemple illustré non limitativement sur la figure 1 le véhicule V comprend un boîtier de distribution BD auquel sont couplés la batterie de servitude BS, le convertisseur CV et le réseau de bord RB. Ce boîtier de distribution BD est chargé de distribuer dans le réseau de bord RB l'énergie électrique stockée dans la batterie de servitude BS ou produite par le convertisseur CV, pour l'alimentation des organes (ou équipements) électriques (notamment EP) en fonction de demandes d'alimentation reçues.

La supervision de la distribution de l'énergie électrique est assurée par un calculateur de supervision CS qui fait partie, ici, du boîtier de distribution BD, bien que cela ne soit pas obligatoire.

On notera également que le véhicule V peut aussi comprendre un équipement de supervision ES chargé de superviser les réveils d'équipements embarqués, et notamment ceux (EP) qui sont impliqués dans le pré-conditionnement. Cet équipement de supervision ES peut, par exemple, comprendre au moins un calculateur. Par exemple, l'équipement de supervision ES peut être programmé de manière à déclencher le pré-conditionnement à un horaire préalablement choisi (par exemple par l'usager du véhicule V), ou bien peut être alerté d'une demande de pré-conditionnement (éventuellement à un horaire choisi) par un message reçu par voie d'ondes par le véhicule V et issu d'un équipement de communication de l'usager du véhicule V (comme par exemple un téléphone intelligent (ou « smartphone »)).

Lorsque l'équipement de supervision ES doit déclencher un pré-conditionnement du véhicule V, il réveille tout équipement impliqué dans ce pré-conditionnement, à commencer par le calculateur maître (ou principal) du véhicule V et tout réseau de communication embarqué (éventuellement multiplexé) utile.

Comme évoqué plus haut, l'invention propose un procédé de contrôle destiné à permettre le contrôle du pré-conditionnement (par l'équipement électrique de conditionnement EP).

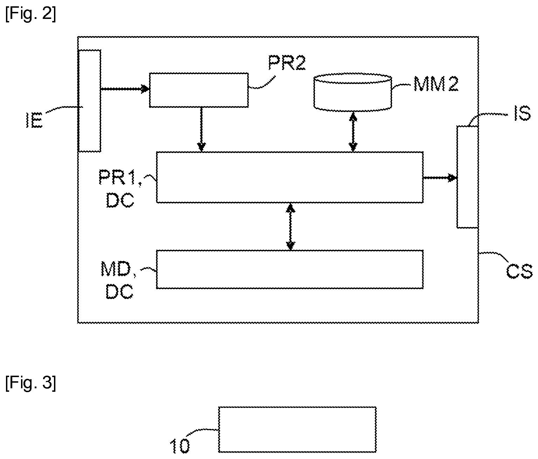

Ce procédé (de contrôle) peut être mis en œuvre par un dispositif de contrôle DC du type de celui illustré sur la figure 2 et comprenant au moins un processeur PR1 et au moins une mémoire MD qui sont agencés pour effectuer des opérations lorsqu'il a été réveillé consécutivement à une demande de pré-conditionnement.

On notera que dans l'exemple illustré non limitativement sur la figure 1, le dispositif de contrôle DC fait partie du calculateur de supervision CS qui fait lui-même partie, ici, du boîtier de distribution BD. Mais il pourrait s'agir d'un équipement comprenant son propre calculateur (comportant le processeur PR et la mémoire MD) et couplé au boîtier de distribution BD ou au calculateur de supervision CS. D'une manière générale, le dispositif de contrôle DC est réalisé sous la forme d'une combinaison de circuits ou composants électriques ou électroniques (ou « hardware ») et de modules logiciels (ou « software »).

Le processeur PR1 peut, par exemple, être un processeur de signal numérique (ou DSP (« Digital Signal Processor »)). Ce processeur PR1 peut comprendre des circuits intégrés (ou imprimés), ou bien plusieurs circuits intégrés (ou imprimés) reliés par des connections filaires ou non filaires. On entend par circuit intégré (ou imprimé) tout type de dispositif apte à effectuer au moins une opération électrique ou électronique. Ainsi, il peut, par exemple, s'agir d'un microcontrôleur.

La mémoire MD est vive afin de stocker des instructions pour la mise en œuvre par le processeur PR1 d'une partie au moins du procédé de contrôle décrit ci-dessous (et donc de ses fonctionnalités).

Comme illustré non limitativement sur la figure 3, le procédé (de contrôle), selon l'invention, comprend une étape 10 qui est mise en œuvre lorsque le pré-conditionnement est requis pendant que le véhicule V est endormi (et donc que son GMP ne fonctionne pas). Dans l'exemple illustré c'est l'équipement de supervision ES qui requiert le pré-conditionnement et donc procède au réveil de tout équipement (notamment EP) impliqué dans ce pré-conditionnement. Dans l'étape 10 on (le dispositif de contrôle DC) autorise le pré-conditionnement tant que deux conditions sont simultanément satisfaites.

La première condition concerne l'état de charge (en cours) ec de la batterie de servitude BS, lequel doit demeurer strictement supérieur à un seuil s1 qui est représentatif de l'état de charge ecmf nécessaire à la mise en fonctionnement du GMP (soit ec > s1). L'état de charge (en cours) ec est ici accessible auprès du boîtier de surveillance BB.

La seconde condition concerne la quantité d'état de charge choisie qeca qui est allouée au pré-conditionnement, laquelle ne doit pas avoir été intégralement utilisée par le pré-conditionnement. En d'autres termes, la quantité d'état de charge qecc qui a été consommée par le pré-conditionnement (depuis son début) doit être inférieure ou égale à la quantité d'état de charge choisie qeca (soit qecc ≤ qeca).

Par exemple, on (le dispositif de contrôle DC) peut déterminer la quantité d'état de charge consommée qecc en effectuant la différence entre l'état de charge eci, qu'avait initialement la batterie de servitude BS au début du pré-conditionnement, et l'état de charge (en cours) ec à l'instant considéré (soit qecc = eci - ec).

On notera que pendant toute la durée du pré-conditionnement on vérifie périodiquement si les deux conditions sont satisfaites, ce qui nécessite à chaque fois la détermination de la quantité d'état de charge consommée qecc. En d'autres termes, l'étape 10 comprend une boucle itérative de vérification. Ainsi, dès que l'une au moins des deux conditions n'est pas satisfaite (soit ec ≤ s1 et/ou qecc > qeca) le pré-conditionnement est interrompu. Une telle interruption peut se faire en requérant que l'équipement de supervision ES cesse de maintenir éveillé le calculateur de supervision CS et/ou le calculateur maître (ou principal).

Grâce à ce contrôle reposant sur la satisfaction simultanée de deux conditions portant sur les états de charge de la batterie de servitude BS, on a l'assurance que la réalisation au moins partielle d'un pré-conditionnement n'empêchera pas la batterie de servitude BS de fournir suffisamment d'énergie électrique pour le réveil du véhicule et le démarrage du GMP.

Il est rappelé que dans le cas d'un GMP tout électrique, dans la phase de démarrage du GMP la batterie de servitude BS peut compléter l'énergie électrique qui est fournie par la batterie principale BP lorsque le niveau de cette dernière est très faible, ce qui se fait alors via le convertisseur CV. Par ailleurs, dans le cas d'un GMP tout électrique le réveil du véhicule peut nécessiter de faire fonctionner plusieurs équipements pouvant potentiellement consommer globalement beaucoup d'énergie. Dans le cas d'un GMP démarré par un alternateur ou un alterno-démarreur, c'est la batterie de servitude BS qui fournit l'importante quantité d'énergie électrique à ce dernier.

Par exemple, dans l'étape 10 on peut utiliser une quantité d'état de charge choisie qeca qui est comprise entre 5% et 15% de l'état de charge maximal ecm de la batterie de servitude BS. A titre d'exemple illustratif la quantité d'état de charge choisie qeca peut être égale à 10% de l'état de charge maximal ecm. Dans une variante de réalisation, dans l'étape 10 on peut utiliser une quantité d'état de charge choisie qeca qui est comprise entre 5% et 15% de l'état de charge initial eci de la batterie de servitude BS (au début du pré-conditionnement). A titre d'exemple illustratif la quantité d'état de charge choisie qeca peut être égale à 10% de l'état de charge initial eci.

Egalement par exemple, dans l'étape 10 on peut choisir le seuil s1 en fonction de la température (interne) en cours tb de la batterie de servitude BS. Il est en effet rappelé que la température (interne) tb influence la quantité d'énergie électrique nécessaire à la mise en fonctionnement du GMP et donc l'état de charge ecmf nécessaire à la fourniture de cette quantité d'énergie électrique. On notera que lorsque l'une au moins des deux conditions n'est pas satisfaite (soit ec ≤ s1 et/ou qecc > qeca) le pré-conditionnement peut ne pas être interrompu immédiatement. En effet, on peut envisager de laisser le pré-conditionnement se poursuivre pendant une durée choisie dc après la détection de la non satisfaction de l'une au moins des deux conditions. Mais cela nécessite que l'on prenne de la marge avec le seuil s1, de sorte qu'il soit sensiblement plus important que l'état de charge ecmf qui est effectivement nécessaire à la mise en fonctionnement du GMP. Une fois la durée choisie dc écoulée, le pré-conditionnement est immédiatement interrompu.

Par exemple, cette durée choisie dc peut être comprise entre 3 mn et 7 mn, notamment dans le cas d'un pré-conditionnement aérothermique. A titre d'exemple illustratif, la durée choisie dc peut être égale à 5 mn.

On notera également, comme illustré non limitativement sur la figure 2, que le calculateur de supervision CS (ou l'éventuel calculateur du dispositif de contrôle DC) peut aussi comprendre, en complément des mémoire vive MD et processeur PR1, une mémoire de masse MM2, notamment pour le stockage des états de charge successifs, et de données intermédiaires intervenant dans tous ses calculs et traitements. Par ailleurs, ce calculateur de supervision CS (ou l'éventuel calculateur du dispositif de contrôle DC) peut aussi comprendre une interface d'entrée IE pour la réception d'au moins les états de charge successifs pour les utiliser dans des calculs ou traitements, éventuellement après les avoir mis en forme et/ou démodulés et/ou amplifiés, de façon connue en soi, au moyen d'un processeur de signal numérique PR2. De plus, ce calculateur de supervision CS (ou l'éventuel calculateur du dispositif de contrôle DC) peut aussi comprendre une interface de sortie IS, notamment pour délivrer les éventuelles requêtes d'obtention de l'état de charge en cours et les messages ou ordres d'interruption du pré-conditionnement.

## Revendications

1. Procédé de contrôle pour un véhicule (V) comprenant un groupe motopropulseur et au moins un équipement électrique (EP) propre à assurer un pré-conditionnement lorsqu'il est alimenté en énergie électrique par une batterie de servitude (BS) ayant un état de charge, comprenant une étape (10) dans laquelle, lorsque ledit pré-conditionnement est requis pendant que ledit véhicule (V) est endormi, on autorise ledit pré-conditionnement tant que ledit état de charge demeure strictement supérieur à un seuil, représentatif d'un état de charge nécessaire à la mise en fonctionnement dudit groupe motopropulseur, **caractérisé en ce qu'**il comprend une condition d'autorisation supplémentaire étant qu'une quantité d'état de charge choisie, allouée audit pré-conditionnement, n'a pas été intégralement utilisée par ledit pré-conditionnement.

2. Procédé selon la revendication 1, **caractérisé en ce que** dans ladite étape (10) on utilise une quantité d'état de charge choisie comprise entre 5% et 15% d'un état de charge maximal de ladite batterie de servitude (BS).

3. Procédé selon la revendication 1, **caractérisé en ce que** dans ladite étape (10) on utilise une quantité d'état de charge choisie comprise entre 5% et 15% d'un état de charge initial de ladite batterie de servitude (BS) au début dudit pré-conditionnement.

4. Procédé selon l'une des revendications 1 à 3, **caractérisé en ce que** dans ladite étape (10) on choisit ledit seuil en fonction d'une température en cours de ladite batterie de servitude (BS).

5. Procédé selon l'une des revendications 1 à 4, **caractérisé en ce que** dans ladite étape (10) ledit équipement électrique (EP) est propre à assurer un pré-conditionnement aérothermique dudit véhicule (V).

6. Dispositif de contrôle (DC) pour un véhicule (V) comprenant un groupe motopropulseur et au moins un équipement électrique (EP) propre à assurer un pré-conditionnement lorsqu'il est alimenté en énergie électrique par une batterie de servitude (BS) ayant un état de charge, **caractérisé en ce qu'**il comprend au moins un processeur (PR1) et au moins une mémoire (MD) agencés pour effectuer les opérations consistant, lorsque ledit pré-conditionnement est requis pendant que ledit véhicule (V) est endormi, à autoriser ledit pré-conditionnement tant que ledit état de charge demeure strictement supérieur à un seuil, représentatif d'un état de charge nécessaire à la mise en fonctionnement dudit groupe motopropulseur, et qu'une quantité d'état de charge choisie, allouée audit pré-conditionnement, n'a pas été intégralement utilisée par ledit pré-conditionnement.

7. Véhicule (V) comprenant un groupe motopropulseur et au moins un équipement électrique (EP) propre à assurer un pré-conditionnement lorsqu'il est alimenté en énergie électrique par une batterie de servitude (BS) ayant un état de charge, **caractérisé en ce qu'**il comprend en outre un dispositif de contrôle (DC) selon la revendication 6.

8. Véhicule selon la revendication 7, **caractérisé en ce qu'**il est de type automobile.

## Patentansprüche

1. Steuerverfahren für ein Fahrzeug (V), das einen Antriebsstrang und mindestens ein elektrisches Gerät (EP) umfasst, das eine Vorkonditionierung gewährleisten kann, wenn es mit elektrischer Energie versorgt wird durch ein Servicebatterie (BS) mit einem Ladezustand, umfassend einen Schritt (10),
in dem, wenn die Vorkonditionierung erforderlich ist, während das Fahrzeug (V) schläft, die Vorkonditionierung zugelassen wird, solange der Ladezustand strikt über einem Schwellenwert bleibt, der einen für den Betrieb der Gruppe erforderlichen Ladezustand darstellt
Antriebsstrang, **dadurch gekennzeichnet, dass** er eine zusätzliche Autorisierungsbedingung umfasst, die darin besteht, dass eine gewählte Ladezustandsmenge, die der Vorkonditionierung zugewiesen ist , durch die Vorkonditionierung nicht vollständig verwendet wurde.

2. Verfahren nach Anspruch 1, **dadurch gekennzeichnet, dass** in Schritt (10) Verwenden eines gewählten Ladezustands zwischen 5 % und 15 % eines maximalen Ladezustands der Servicebatterie (BS).

3. Verfahren nach Anspruch 1, **dadurch gekennzeichnet, dass** im Schritt (10) ein gewählter Ladezustand zwischen 5 % und 15 % eines anfänglichen Ladezustands der Servicebatterie (BS) beim Start verwendet wird.
dieser Vorkonditionierung.

4. Verfahren nach einem der Ansprüche 1 bis 3, **dadurch gekennzeichnet, dass** in dem Schritt (10) der Schwellenwert als Funktion einer aktuellen Temperatur der Servicebatterie (BS) gewählt wird.

5. Verfahren nach einem der Ansprüche 1 bis 4, **dadurch gekennzeichnet, dass**
in dem Schritt (10) ist die elektrische Ausrüstung (EP) in der Lage, eine aerothermische Vorkonditionierung des Fahrzeugs (V) sicherzustellen.

6. Steuergerät (DC) für ein Fahrzeug (V), das einen Antriebsstrang und mindestens eine elektrische Ausrüstung (EP) umfasst, die in der Lage ist, eine Vorkonditionierung sicherzustellen, wenn sie mit elektrischer Energie versorgt wird durch ein
Servicebatterie (BS) mit einem Ladezustand, **dadurch gekennzeichnet, dass** sie mindestens einen Prozessor (PR1) und mindestens einen Speicher (MD) umfasst, die so angeordnet sind, dass sie die Operationen ausführen, die bestehen, wenn die Vor- Konditionierung erforderlich ist, während das Fahrzeug (V) schläft, um die Vorkonditionierung zuzulassen, solange der Ladezustand streng über einem Schwellenwert bleibt, der einen für den Betrieb des Antriebsstrangs erforderlichen Ladezustand darstellt, und dass eine Menge Der gewählte Ladezustand, der der Vorkonditionierung zugewiesen wurde, wurde
durch die Vorkonditionierung nicht vollständig genutzt.

7. Fahrzeug (V), das einen Antriebsstrang und mindestens ein elektrisches Gerät (EP) umfasst, das eine Vorkonditionierung gewährleisten kann, wenn es von einer Servicebatterie (BS) mit elektrischer Energie versorgt wird, die Folgendes aufweist:
Ladezustand, **dadurch gekennzeichnet, dass** es außerdem eine Steuervorrichtung (DC) gemäß Anspruch 6 umfasst.

8. Fahrzeug nach Anspruch 7, **dadurch gekennzeichnet, dass** es vom Typ eines Personenkraftwagens ist.

## Claims

1. Control method for a vehicle (V) comprising a powertrain and at least one piece of electrical equipment (EP) capable of ensuring pre-conditioning when it is supplied with electrical energy by a
service battery (BS) having a state of charge, comprising a step (10) in which, when said pre-conditioning is required while said vehicle (V) is asleep, said pre-conditioning is authorized as long as said state of charge remains strictly above a threshold, representative of a state of charge necessary for the operation of said group
powertrain, **characterized in that** it comprises an additional authorization condition
being that a chosen state of charge quantity, allocated to said preconditioning , has not been fully used by said preconditioning.

2. Method according to claim 1, **characterized in that** in said step (10) using a chosen state of charge quantity between 5% and 15% of a maximum state of charge of said service battery (BS).

3. Method according to claim 1, **characterized in that** in said step (10) a chosen state of charge quantity of between 5% and 15% of an initial state of charge of said service battery (BS) at the start is used.
of said preconditioning.

4. Method according to one of claims 1 to 3, **characterized in that** in said step (10) said threshold is chosen as a function of a current temperature of said service battery (BS).

5. Method according to one of claims 1 to 4, **characterized in that** in said step (10) said electrical equipment (EP) is capable of ensuring aerothermal preconditioning of said vehicle (V).

6. Control device (DC) for a vehicle (V) comprising a powertrain and at least one electrical equipment (EP) capable of ensuring pre-conditioning when it is supplied with electrical energy by a
service battery (BS) having a state of charge, **characterized in that** it comprises at least one processor (PR1) and at least one memory (MD) arranged to carry out the operations consisting, when said pre- conditioning is required while said vehicle (V) is asleep, to authorize said pre-conditioning as long as said state of charge remains strictly above a threshold, representative of a state of charge necessary for the operation of said powertrain, and that a quantity chosen state of charge, allocated to said preconditioning, has not been fully used by said preconditioning.

7. Vehicle (V) comprising a powertrain and at least one piece of electrical equipment (EP) capable of ensuring pre-conditioning when it is supplied with electrical energy by a service battery (BS) having a
state of charge, **characterized in that** it further comprises a control device (DC) according to claim 6.

8. Vehicle according to claim 7, **characterized in that** it is of the automobile type.
